# EUROPÄISCHE PATENTSCHRIFT

(11) **EP 2 330 687 B1**
(45) Veröffentlichungstag und Bekanntmachung des Hinweises auf die Patenterteilung: **10.07.2013**
(21) Anmeldenummer: 10193527.8
(22) Anmeldetag: 02.12.2010
(51) Int. Cl.: H01R 13/58, H01R 4/50, H01R 4/48

(54) **Kontaktierungssystem zur Herstellung eines elektrischen Anschlusses**
Contacting system for producing an electric connection
Système de mise en contact pour l'établissement d'un raccordement électrique

(30) Priorität: 03.12.2009 DE 102009056535
(43) Veröffentlichungstag der Anmeldung: 08.06.2011
(73) Patentinhaber: Günther Spelsberg GmbH & Co. KG, 58579 Schalksmühle (DE)
(72) Erfinder: Spelsberg, Holger, 58579, Schalksmühle (DE); Scheib, Andreas, 58239, Schwerte (DE); Quardt, Dirk, 58638, Iserlohn (DE); Hauck, Dirk, 58553, Halver (DE); Zborowski, Zbigniew, 58509, Lüdenscheid (DE)
(74) Vertreter: Michalski Hüttermann & Partner Patentanwälte

(56) Entgegenhaltungen:
- DE-A1- 19 825 629
- DE-B- 1 213 024
- US-A- 5 851 124
- US-A1- 2007 117 447
- US-B1- 7 121 872

## Beschreibung

Die Erfindung betrifft ein Kontaktierungssystem zur Herstellung eines elektrischen Anschlusses, insbesondere für ein Solarmodul und/oder eine Phorovoltaik-Anlage, bei welchem eine Anschlussleitung auf einen in einer Anschlussdose angeordneten Kontaktstift zur Erstellung des elektrischen Kontaktes aufschiebbar ist, ohne dass die Isolierung der Anschlussleitung entfernt werden muss.

Aus dem Stand der Technik sind unterschiedliche Vorrichtungen zur Herstellung von elektrischen Kontakten zwischen einem elektrischen oder elektronischen Bauteil und einer Anschlussleitung bekannt. Vielfach sind diese Vorrichtungen als Klemm- oder Quetschvorrichtung ausgebildet, bei welcher das leitfähige Element einer Anschlussleitung, welches in der Regel aus einer Litze oder einer Drahtader gebildet ist, zwischen einem Klemmschuh und einem Widerlager eingeklemmt wird. Beispiele hierfür sind Schraubklemmen wie Lüsterklemmen oder Blockklemmen, oder Federzugklemmen.

Ein Nachteil dieser Art der Kontaktierungssysteme ist, dass nur der äußere Bereich des leitfähigen Elementes der Anschlussleitung zur Herstellung des elektrischen Kontaktes genutzt wird. Dies kann zu einem erhöhten Leitungswiederstand in dem Kontaktsystem führen. Darüber hinaus muss bei diesen aus dem Stand der Technik bekannten Systemen zur Herstellung des elektrischen Kontaktes die Isolierung um das leitfähige Element der Anschlussleitung entfernt werden, was einen erhöhten Montageaufwand bedingt. Alternativ ist es aus dem Stand der Technik allgemein bekannt, Steckkontakte zur Herstellung eines elektrischen Kontaktes zwischen einem Bauteil und einer Anschlussleitung zu nutzen. Diese Steckkontakte weisen jedoch zumindest an dem anschlussleitungsseitigen Stecker ebenfalls Klemm- oder Quetschvorrichtungen auf, so dass die damit verbundenen Nachteile auch bei solchen Steckverbindungen auftreten. Darüber hinaus bilden Steckverbindungen zusätzliche Bauelemente, die die Gesamtkosten des Kontaktierungssystems erhöhen.

Bei der Errichtung von Photovoltaik-Anlagen (PV-Anlagen) ist es ein Ziel, eine möglichst hohe Leistungsausbeute der eingestrahlten Sonnenenergie zu erreichen. Durch Kontaktierungssysteme verursachte erhöhte Leitungswiederstände können jedoch zu signifikanten Verlusten in der Leistungsausbeute der PV-Anlage führen. Darüber hinaus bedingt die Montagesituation solcher PV-Anlagen auf Dächern oder an Fassaden, dass die zur elektrischen Kontaktierung der Anlagen vorgesehenen Kontaktierungssysteme eine möglichst einfache und schnelle Montage erlauben.

Die US 7121872 B1 beschreibt einen elektrischen Verbinder mit einer leitfähigen Spitze und einem Zugentlastungssystem. Zum Zweck der Zugentlastung sind hier ein Kragen sowie eine Kappe vorgesehen. Die Kappe und der Kragen sind auf dem Leiter aufgeschraubt. Der Leiter wird in einen zweiten Kragen geschoben, innerhalb welchem sich eine Spitze befindet. Anschließend wird die Kappe zusammen mit dem Kragen auf den zweiten Kragen geschraubt. Die Zugentlastung entsteht durch Verschraubung und Verkeilung des Kragens, indem die Kappe auf den zweiten Kragen geschraubt und der Kragen mit dem Leiter verkeilt wird. Damit ist eine Zugentlastung auch dann ermöglicht, wenn kein Kontakt zwischen dem Leiter und der elektrisch leitenden Spitze vorhanden ist

Vor dem Hintergrund dieses Standes der Technik ist es die Aufgabe der Erfindung, ein Kontaktierungssystem anzugeben, welches ein einfaches und verlässliches Anschließen einer Anschlussleitung, insbesondere an ein Solarmodul und/oder eine PV-Anlage, ermöglicht.

Gelöst wird diese Aufgabe durch ein Kontaktierungssystem gemäß Patentanspruch 1.

Durch die erfindungsgemäße Ausgestaltung eines Kontaktierungssystems ist es vorteilhafterweise möglich, eine Anschlussleitung an ein Solarmodul oder eine PV-Anlage anzuschließen, ohne dass die Notwendigkeit besteht, die um den Leiter der Anschlussleitung vorgesehene Isolierung zu entfernen. Dies verringert und erleichtert den Montageaufwand deutlich. Insbesondere ist durch eine solche Ausgestaltung eine Montage der Anschlussleitung mit einer Hand möglich, so dass die zweite Hand des Monteurs z.B. zur Eigensicherung genutzt werden kann.

Darüber hinaus wird durch das erfindungsgemäße Kontaktierungssystem der innere Bereich des Leiters der Anschlussleitung zur Ausbildung des elektrischen Kontaktes genutzt, wodurch ein verringerter Leitungswiederstand und damit einhergehend ein verbesserter Wirkungsgrad der PV-Anlage erreicht werden kann. Ebenfalls trägt zur Verbesserung des Wirkungsgrades bei, dass die vorzusehenden Anschlussleitungen in optimierter Länge abgelängt werden können. Hierdurch reduzieren ebenfalls die Kosten, da Leitungsverschnitt vermieden wird.

In einer bevorzugten Ausgestaltung der Erfindung ist der Kontaktstift derart in der Anschlussdose angeordnet, dass dieser im Wesentlichen querschnittzentriert in die Litze eindringt, so dass der Kontaktstift in eingedrungener Position rundherum von der Litze umgeben ist. Hierdurch wird eine optimierte Kontaktierung zwischen Kontaktstift und Litze sichergestellt.

Vorteilhafterweise ist der Kontaktstift aus einem gegenüber den beim Aufstecken der Anschlussleitung auftretenden Kräften verformungsstabilen Material gebildet, so dass ein Verbiegen oder Verformen des Kontaktstiftes beim Aufschieben der Anschlussleitung vermieden wird. Um gleichzeitig einen optimierten Leitungswiederstand zwischen Litze und Kontaktstift sicherzustellen, kann es erfindungsgemäß vorgesehen sein, dass der Kontaktstift zumindest eine äußere Kontaktfläche besitzt, die einen geringen Leitungswiederstand aufweist. Beispielsweise kann die Kontaktfläche aus Kupfer, einer Kupferlegierung wie z.B. Messing, Bronze oder Neusilber, oder auch Silber oder Gold gebildet sein.

Der Kern des Kontaktstiftes kann zur Aufnahme der beim Aufschieben der Anschlussleitung entstehenden Kräfte aus einem verformungsstabilen Material wie beispielsweise Stahl gebildet sein. Zur Bereitstellung einer entsprechend leifähigkeitsoptimierten Oberfläche kann auf einen solchen Kern durch geeignete Methoden, wie z.B. galvanische Verfahren, eine Schicht der zuvor genannten Materialien mit geringem Leitungswiederstand aufgebracht werden. In einer bevorzugten Ausgestaltung ist der Kontaktstift aus einem Stahlkern und einer darauf aufgebrachten Bronzeschicht gebildet. Hierbei biete die aufgebrachte Bronzeschicht den Vorteil einer sehr guten Leitfähigkeit bei gleichzeitig hoher Korrosionsfestigkeit, wodurch auch langfristig ein optimierter Leitungswiederstand zwischen Kontaktstift und Litze sichergestellt wird.

Gemäß einer Weiterbildung der Erfindung kann im Bereich des Kontaktstiftes eine Führung vorgesehen sein, über welche die Anschlussleitung eng geführt wird. Eine solche Führung kann als Widerlager für die Anschlussleitung dienen, welche sich beim Eindringen des Kontaktstiftes und der damit einhergehenden Querschnittsvergrößerung gegenüber der Führung abstützt. Hierdurch wird eine Klemmkraft auf die Anschlussleitung ausgeübt, welche einen guten Kontakt zwischen Kontaktstift und Litze sicherstellt.

In einer weiteren Ausgestaltung der Erfindung weist das Gehäuse der Anschlussdose in seiner Wandung eine Ausnehmung zur Einführung der Anschlussleitung in das Gehäuse und ein Führungselement auf, wobei das Führungselement derart ausgebildet ist, dass eine durch die Ausnehmung in das Gehäuse eingeführte Anschlussleitung mittels des Führungselementes so geführt wird, dass die Litze der Anschlussleitung im wesentlichen querschnittzentriert auf den Kontaktstift trifft. Hierdurch wird die Montage der Anschlussleitung vereinfacht und es wird vermieden, dass es zu Fehlkontaktierungen kommt. Das Führungselement kann beispielsweise durch ein Führungsrohr oder Führungsschienen gebildet seine, welche sich auf der Innenseite des Gehäuses von der Ausnehmung bis zum Kontaktstift erstrecken und querschnittzentriert zum Kontaktstift angeordnet sind.

Desweiteren weist das erfindungsgemäße Kontaktierungssystem ein Zugentlastungselement auf. Hierdurch können auf die Anschlussleitung einwirkende Zugkräfte abgefangen werden und ein Abrutschen der Anschlussleitung bzw. der Litze vom Kontaktstift wird verhindert. Ferner weist das Zugentlastungelement eine Einführungsöffnung und ein Vorspannelement auf, wobei das Vorspannelement das Zugentlastungselement derart vorspannt, dass das Zugentlastungselement auf eine in dieses eingeführte Anschlussleitung beim Einführen derselben in das Zugentlastungselement zunächst keine Klemmkraft ausübt, wobei die Anschlussleitung beim Einführen desselben derart auf das Vorspannelement einwirkt, dass bei einer vorbestimmten Einführungstiefe der Anschlussleitung, bei welcher der Kontaktstift im Wesentlichen in die Litze eingedrungen ist, die Vorspannung des Zugentlastungselementes gelöst wird, wodurch das Zugentlastungselement in eine Stellung kommt, in der es auf die eingeführte Anschlussleitung eine Klemmkraft ausübt, die als Zugentlastung für die Anschlussleitung wirkt. Diese Ausgestaltung ermöglicht das einfache und sichere Einführen des Anschlusskabels in die Anschlussdose, wobei gleichzeitig durch das Auslösen des Vorspannelementes erst in der aufgeschobenen Position der Anschlussleitung auf dem Kontaktstift sichergestellt wird, dass ein hinreichendes Eindringen des Kontaktstiftes in die Litze erreicht ist und ein hinreichender elektrischer Kontakt sichergestellt ist. Der Monteur kann dies bei der Montage dadurch feststellen, dass sich die Anschlussleitung nicht mehr aus der Anschlussdose herausziehen lässt.

Gemäß einer Weiterbildung der Erfindung kann in dem Kontaktierungssystem auch ein Dichtungselement zur insbesondere wetterdichten Abdichtung der Anschlussleitung gegenüber dem Gehäuse vorgesehen sein. Geeignete Dichtungselemente sind z.B. Pressringdichtungen, Dichtungsstopfen oder dergleichen.

Das erfindungsgemäße Kontaktierungssystem wird nachfolgend anhand vor Figuren weiter beschrieben, wobei
- Fig. 1: eine schematische Darstellung einer auf einen Kontaktstift aufgeschobenen Anschlussleitung zeigt;
- Fig. 2: eine schematische Darstellung eines in einem Kontaktierungssystems gemäß einem bevorzugten Ausführungsbeispiel der Erfindung einsetzbaren Zugentlastungselementes in nicht zugentlastender Position zeigt;
- Fig. 3: eine schematische Darstellung eines in einem Kontaktierungssystem gemäß einem bevorzugten Ausführungsbeispiel der Erfindung einsetzbaren Zugentlastungselementes in zugentlastender Position zeigt; und
- Fig. 4: eine schematische Darstellung einer auf einen Kontaktstift aufgeschobenen Anschlussleitung zeigt, welche sich gegenüber einer Führung abstützt.

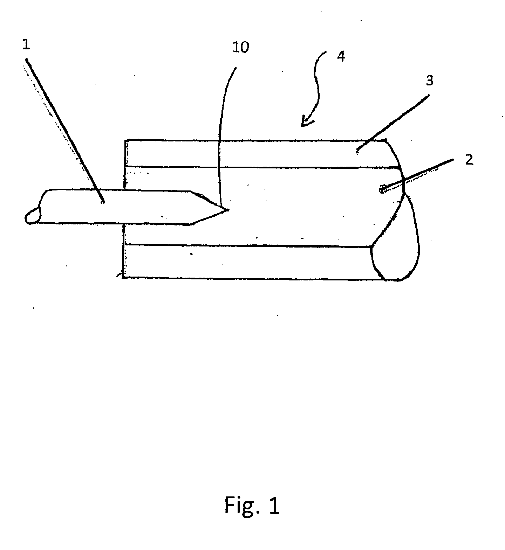

Aus Fig. 1 ist die Funktionsweise eines Kontaktierungssystems gemäß einem bevorzugten Ausführungsbeispiel der Erfindung ersichtlich. Zur elektrischen Verbindung eines Solarmoduls oder einer PV-Anlage mit einer Anschlussleitung 4 wird ein Kontaktstift 1, welcher mit dem Solarmodul oder der PV-Anlage elektrisch leitend verbunden ist, in die Litze 2 einer Anschlussleitung 4 eingeschoben bzw. ist die Anschlussleitung 4 mit ihrer Litze 2 auf den Kontaktstift aufgeschoben. Die Anschlussleitung 4 weist eine Isolierung 3 auf, welche zur Herstellung des elektrischen Kontaktes zwischen dem Solarmodul oder der PV-Anlage nicht entfernt werden muss. Um das Aufschieben der Anschlussleitung 4 auf den Kontaktstift 1 bzw. dessen Eindringen in die Litze 2 zu erleichtern, kann der Kontaktstift 1 eine Spitze 10 aufweisen. In aufgeschobener bzw. eingedrungener Position wird der in die Anschlussleitung 4 eingeführte Abschnitt des Kontaktstiftes 1 peripher von der Litze 2 umschlossen, wodurch ein elektrische Kontakt zwischen dem Solarmodul/der PV-Anlage und der Anschlussleitung 4 sichergestellt wird. Wie in Fig. 1 gezeigt ist es dabei vorteilhafterweise vorgesehen, dass der Kontaktstift 1 querschnittzentriert in die Litze 2 der Anschlussleitung 4 eingeführt wird, um eine vollständige Kontaktierung des eingeführten Abschnittes des Kontaktstiftes 1 zu ermöglich.

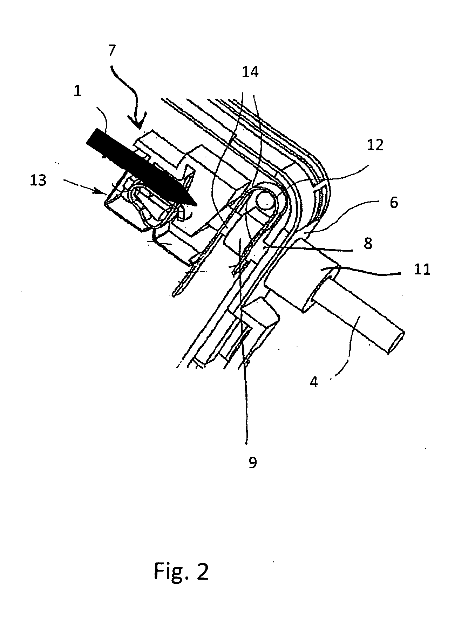

Aus Fig. 2 ist insbesondere die Funktionsweise eines in einem Kontaktierungssystem gemäß einem bevorzugten Ausführungsbeispiel der Erfindung einsetzbaren Zugentlastungselementes 12 zu entnehmen. Eine Anschlussleitung 4 wird über eine Ausnehmung 8 in der Wandung des Gehäuses 6 der Anschlussdose in diese eingeführt. Innerhalb des Gehäuses 6 ist ein elektrisches Anschlusselement 7 vorgesehen, welches einen Kontaktstift 1 aufweist. Die in das Gehäuse 6 eingeführte Anschlussleitung 4 wird mittels eines Führungselementes 9 so innerhalb des Gehäuses 6 geführt, dass diese querschnittzentriert auf den Kontaktstift 1 trifft und auf diesen aufschiebbar ist. Dabei passiert die Anschlussleitung 4 Einführungsöffnungen 14 des Zugentlastungselementes 12, welches sich im Moment des Einführens der Anschlussleitung 4 in die Anschlussdose mittels eines Vorspannelementes 13 in einer Position befindet, in welcher es keine Klemmkraft auf die Anschlussleitung 4 ausübt. Bei Erreichen eines hinreichenden Eindringens des Kontaktstiftes 1 in die Litze 2 der Anschlussleitung 4 wird ein Vorspannelement 13 ausgelöst, wodurch das Zugentlastungselement 12 in eine Position wechselt, in welcher es ein zur Zugentlastung hinreichende Klemmkraft auf die Anschlussleitung 4 ausübt. Hierdurch wird ein Abrutschen der Anschlussleitung 4 von dem Kontaktstift 1 verhindert. Zur insbesondere wetterfesten Abdichtung der Anschlussleitung 4 gegenüber dem Gehäuse 6 ist in Fig.2 ein Dichtungselement 11 vorgesehen, welches beispielsweise als Dichtungsstopfen oder Pressringdichtung ausgeführt ist.

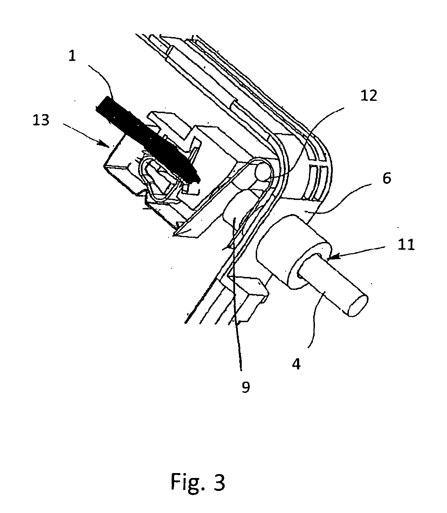

Fig. 3 zeigt ein Kontaktierungssystem gemäß einem bevorzugten Ausführungsbeispiel der Erfindung bei welchem die Anschlussleitung 4 hinreichend auf den Kontaktstift 1 aufgeschoben ist, wodurch das Vorspannelement 13 ausgelöst ist und das Zugentlastungselement 12 sich in Klemmposition befindet. Hierdurch wird eine zur Verhinderung des Abrutschens der Anschlussleitung 4 vom Kontaktstift 1 hinreichende Klemmkraft auf die Anschlussleitung ausgeübt.

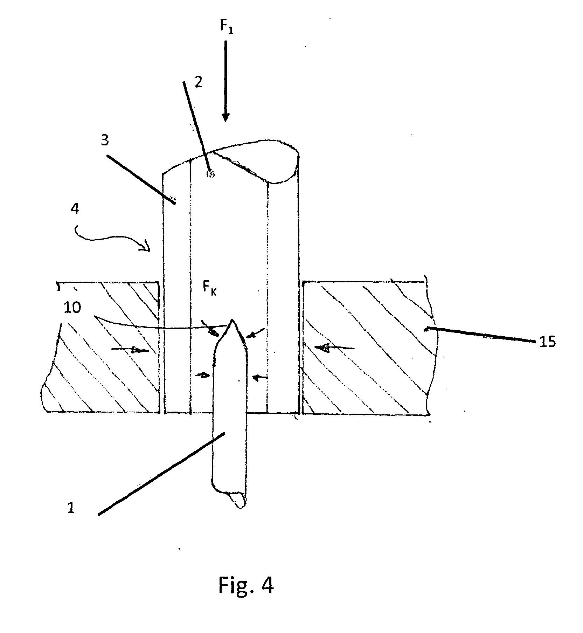

Fig. 4 zeigt eine schematische Darstellung einer Ausgestaltung der Erfindung, in welcher eine auf einen Kontaktstift 1 aufgeschobenen Anschlussleitung 4 sich gegenüber einer Führung 15 abstützt. Die Anschlussleitung 4 ist im Bereich des Kontaktstiftes 1 eng geführt. Durch das Aufschieben der Anschlussleitung 4 auf den Kontaktstift 1 erweitert sich der Querschnitt der Anschlussleitung 4, so dass es zur Ausbildung einer Klemmkraft zwischen der als Widerlager dienenden Führung 15 und der Anschlussleitung 4 kommt, welche in einem Anpressen der Litze 2 an den Kontaktstift 1 führt. Hierdurch wird ein guter mechanischer Kontakt zwischen Kontaktstift 1 und Litze 2 sichergestellt, was wiederum den elektrischen Kontakt verbessern kann. Durch das Aufschieben der Anschlussleitung 4 auf den Kontaktstift 1 mit einer Aufschiebekraft F₁ wird der Querschnitt der Anschlussleitung 4 erweitert. Bei einer engen Führung der Anschlussleitung 4 im Bereich des Kontaktstiftes 1 führt diese Querschnittserweiterung dazu, dass die Litze 2 mit einer Kontaktkraft F_{K} an den Kontaktstift 1 angepresst wird.

## Patentansprüche

1. Kontaktierungssystem zur Herstellung eines elektrischen Anschlusses, insbesondere für ein Solarmodul und/oder eine photovoltaik Anlage, aufweisend eine Anschlussdose mit einem Gehäuse (6) und ein darin vorgesehenes elektrisches Anschlusselement (7), wobei das elektrische Anschlusselement (7) einen Kontaktstift (1) zur Kontaktierung einer eine leitfähige Litze (2) und eine äußere Isolierung (3) aufweisenden Anschlussleitung (4) aufweist, wobei der Kontaktstift (1) derart ausgebildet ist, dass die Anschlussleitung (4) zur elektrischen Kontaktierung auf den Kontaktstift (1) in der Weise aufsteckbar ist, dass der Kontaktstift (1) unter Ausbildung eines elektrischen leitfähigen Kontaktes in die Litze (2) der Anschlussleitung (4) eindringt, wobei das Kontaktierungssystem ein Zugentlastungselement für die Anschlussleitung (4) aufweist, wobei das Zugentlastungselement (12) eine Einführungsöffnung (14) und ein Vorspannelement (13) aufweist, **dadurch gekennzeichnet, dass** das Vorspannelement (13) das Zugentlastungselement (12) derart vorspannt, dass das Zugentlastungselement (12) auf eine in dieses eingeführte Anschlussleitung (4) beim Einführen derselben in das Zugentlastungselement (12) zunächst keine Klemmkraft ausübt, wobei die Anschlussleitung (4) beim Einführen desselben derart auf das Vorspannelement (13) einwirkt, dass bei einer vorbestimmten Einfuhrungstiefe der Anschlussleitung (4), bei welcher der Kontaktstift (1) im Wesentlichen in die Litze (2) eingedrungen ist, die Vorspannung des Zugentlastungselementes (12) gelöst wird, wodurch das Zugentlastungselement (12) in eine Stellung kommt, in der es auf die eingeführte Anschlussleitung (4) eine Klemmkraft, ausübt, die als Zugentlastung für die Anschlussleitung (4) wirkt.

2. Kontaktierungssystem nach Anspruch 1, wobei der Kontaktstift (1) derart in der Anschlussdose angeordnet ist, dass dieser im Wesentlichen querschnittzentriert in die Litze (2) eindringt.

3. Kontaktierungssystem nach einem der vorhergehenden Ansprüche, wobei der Kontaktstift (1) aus einem gegenüber den beim Aufstecken der Anschlussleitung (4) auftretenden Kräften verformungsstabilen Material gebildet ist.

4. Kontaktierungssystem nach einem der vorhergehenden Ansprüche, wobei der Kontaktstift (1) eine äußere Kontaktfläche mit einem niedrigen Leitungswiederstand aufweist.

5. Kontaktierungssystem nach Anspruch 4, wobei zumindest die äußere Kontaktfläche des Kontaktstiftes (1) aus Kupfer, einer Kupferlegierung, Silber und/oder Gold gebildet ist.

6. Kontaktierungssystem nach einem der vorhergehenden Ansprüche, wobei das Gehäuse (6) in seiner Wandung eine Ausnehmung (8) zur Einführung der Anschlussleitung (4) in das Gehäuse (6) und ein Führungselement (9) aufweist, wobei das Führungselement (9) derart ausgebildet ist, dass eine durch die Ausnehmung (8) in das Gehäuse (6) eingeführte Anschlussleitung (4) mittels des Führungselementes (9) so geführt wird, dass die Litze (2) der Anschlussleitung (4) im wesentlichen querschnittzentriert auf den Kontaktstift (1) trifft.

7. Kontaktierungssystem nach einem der vorhergehenden Ansprüche, wobei dieses ein Dichtungselement (11) zur insbesondere wetterdichten Abdichtung der Anschlussleitung (4) gegenüber dem Gehäuse (6) aufweist.

8. Kontaktierungssystem nach einem der vorhergehenden Ansprüche, wobei dieses im Bereich des Kontaktstiftes (1) eine Führung (15) aufweist, mittels welcher die Anschlussleitung (4) eng geführt wird.

## Claims

1. A contacting system for establishing an electrical connection, in particular for a solar module and/or a photovoltaic plant, comprising a junction box having a housing (6) and an electrical connection element (7) provided therein, wherein the electrical connection element (7) comprises a contact pin (1) for establishing contact with a connecting cable (4) comprising a conductive strand (2) and outer insulation (3), wherein the contact pin (1) is designed so that the connecting line (4), for the purpose of establishing the electrical contact, can be plugged onto the contact pin (1) in such a manner that the contact pin (1) penetrates into the strand (2) of the connecting line (4) forming an electrical conductive contact, wherein the contacting system comprises a strain relief element for the connecting line (4), wherein the strain relief element (12) has an insertion opening (14) and a preload element (13), **characterized in that** the preload element (13) preloads the strain relief element (12) so that the strain relief element (12) initially does not exert a clamping force onto a connecting line (4) that is inserted into this element during insertion of this line into the strain relief element (12), wherein the connecting line (4) during insertion acts upon the preload element (13) so that the preload of the strain relief element (12) is removed at a predetermined insertion depth of the connecting line (4) at which the contact pin (1) has substantially penetrated into the strand (2), whereby the strain relief element (12) moves into a position in which the same exerts a clamping force, which acts as strain relief for the connecting line (4), onto the inserted connecting line (4).

2. The contacting system according to claim 1, wherein the contact pin (1) is arranged in the junction box so that this pin penetrates into the strand (2) in a substantially cross-sectionally centered manner.

3. A contacting system according to any one of the preceding claims, wherein the contact pin (1) is made of a material that is deformation-stable with respect to the forces that occur when the connecting line (4) is plugged on.

4. A contacting system according to any one of the preceding claims, wherein the contact pin (1) comprises an outer contact surface having a lower line resistance.

5. The contacting system according to claim 4, wherein at least the outer contact surface of the contact pin (1) is made of copper, a copper alloy, silver and/or gold.

6. A contacting system according to any one of the preceding claims, wherein the wall of the housing (6) has a cut-out (8) for inserting the connecting line (4) into the housing (6) and a guide element (9), wherein the guide element (9) is designed such that a connecting line (4) that is inserted into the housing (6) through the cut-out (8) is guided by way of the guide element (9) so that the strand (2) of the connecting line (4) meets with the contact pin (1) in a substantially cross-sectionally centered manner.

7. A contacting system according to any one of the preceding claims, wherein the same comprises a sealing element (11) in particular for sealing the connecting line (4) with respect to the housing (6) in a weather-proof manner.

8. A contacting system according to any one of the preceding claims, wherein the same comprises a guide (15), by means of which the connecting line (4) is closely guided, in the region of the contact pin (1).

## Revendications

1. Système de mise en contact pour l'établissement d'un contact électrique, en particulier pour un module solaire et/ou un dispositif photovoltaïque, comportant une prise de raccordement avec un boîtier (6) et un élément de raccordement électrique (7) prévu dans celui-ci, dans lequel l'élément de raccordement électrique (7) comporte une broche de contact (1) pour la mise en contact d'une ligne de raccordement (4) comportant un toron conducteur (2) et une isolation extérieure (3), dans lequel la broche de contact (1) est conçue de manière à ce que la ligne de raccordement (4) puisse être enfichée de telle façon sur la broche de contact (1) pour la mise en contact électrique, que la broche de contact (1) s'insère dans le toron (2) de la ligne de raccordement (4) en produisant un contact électrique conducteur, dans lequel le système de mise en contact comporte un élément de soulagement de traction pour la ligne de raccordement (4), dans lequel l'élément de soulagement de traction (12) comporte une ouverture d'insertion (14) et un élément de précontrainte (13), **caractérisé en ce que** l'élément de précontrainte (13) précontraint l'élément de soulagement de traction (12) de manière à ce que l'élément de soulagement de traction (12) n'exerce tout d'abord aucune force de serrage sur une ligne de raccordement (4) insérée dans celui-ci, pendant l'insertion de celle-ci dans l'élément de soulagement de traction (12), dans lequel la ligne de raccordement (4) agit sur l'élément de précontrainte lors de l'insertion de celle-ci, de telle sorte qu'avec une profondeur d'insertion prédéterminée de la ligne de raccordement (4), à laquelle la broche de contact (1) est quasiment enfoncée dans le toron (2), la précontrainte de l'élément de soulagement de traction (12) est relâchée, suite à quoi l'élément de soulagement de traction (12) prend une position dans laquelle il exerce une force de serrage sur la ligne de raccordement (4) insérée, permettant ainsi de soulager la traction pour la ligne de raccordement (4).

2. Système de mise en contact selon la revendication 1, dans lequel la broche de contact (1) est disposée de telle façon dans la prise de raccordement, que celle-ci s'introduit de façon quasiment centrée dans la section transversale du toron (2).

3. Système de mise en contact selon l'une des revendications précédentes, dans lequel la broche de contact (1) est constituée d'un matériau résistant à la déformation face aux forces apparaissant lors de l'enfichage de la ligne de raccordement (4).

4. Système de mise en contact selon l'une des revendications précédentes, dans lequel la broche de contact (1) comporte une surface de contact extérieure avec une faible résistivité.

5. Système de mise en contact selon la revendication 4, dans lequel au moins la surface de contact extérieure de la broche de contact (1) est constituée de cuivre, d'un alliage de cuivre, d'argent et/ou d'or.

6. Système de mise en contact selon l'une des revendications précédentes, dans lequel le boîtier (6) comporte une cavité (8) dans sa paroi, pour l'introduction de la ligne de raccordement (4) dans le boîtier (6), ainsi qu'un élément de guidage (9), dans lequel l'élément de guidage (9) est conçu de manière à ce qu'une ligne de raccordement (4) introduite dans le boîtier (6) par la cavité (8) soit guidée de telle façon au moyen de l'élément de guidage (9), que le toron (2) de la ligne de raccordement (4) rencontre la broche de contact (1) quasiment au centre de sa section transversale.

7. Système de mise en contact selon l'une des revendications précédentes, dans lequel celui-ci comporte un élément d'étanchéité (11) pour isoler la ligne de raccordement (4) par rapport au boîtier (6), en particulier face aux intempéries.

8. Système de mise en contact selon l'une des revendications précédentes, dans lequel celui-ci comporte un guidage (15) dans la région de la broche de contact (1), au moyen duquel la ligne de raccordement (4) est guidée étroitement.
